# EUROPÄISCHE PATENTSCHRIFT

(11) **EP 1 292 911 B1**
(45) Veröffentlichungstag und Bekanntmachung des Hinweises auf die Patenterteilung: **03.03.2004**
(21) Anmeldenummer: 01943494.3
(22) Anmeldetag: 11.06.2001
(51) Int. Cl.: G06K 7/00

(54) **STEUERUNG DER KOMMUNIKATION BEI ZUGRIFFS- UND ZUGANGSKONTROLLSYSTEMEN**
CONTROL OF COMMUNICATION IN ACCESS AND ENTRY SYSTEMS
CONTROLE DE TRANSMISSION POUR SYSTEMES DE CONTROLE D'ACCES

(30) Priorität: 20.06.2000 DE 10029320; 23.02.2001 DE 10108914
(43) Veröffentlichungstag der Anmeldung: 19.03.2003
(73) Patentinhaber: Fraunhofer-Gesellschaft zur Förderung der angewandten Forschung e.V., 80686 München (DE); Deutsche Telekom AG, 53113 Bonn (DE)
(72) Erfinder: HEUER, André, 85386 Eching (DE); BARTEL-KURZ, Birgit, 91054 Erlangen (DE); PLANKENBÜHLER, Roland, 90475 Nürnberg (DE); GERHÄUSER, Heinz, 91344 Waischenfeld (DE); LAKOMY, Rolf, 48308 Senden (DE)
(74) Vertreter: Schoppe, Fritz, Dipl.-Ing.
(86) Internationale Anmeldenummer: PCT/EP2001/006600
(87) Internationale Veröffentlichungsnummer: WO 2001/099038

(56) Entgegenhaltungen:
- EP-A- 0 513 507
- WO-A-99/01960
- US-A- 4 924 210

## Beschreibung

Die vorliegende Erfindung bezieht sich auf die Steuerung der Kommunikation zwischen einer Empfangseinrichtung und einem mit derselben kommunizierenden Modul, und insbesondere auf solche Verfahren und Vorrichtungen, die zur Verwendung in Zugriffs- und Zugangskontrollsystemen geeignet sind, bei denen Singlechipmodule in Endgeräten verwendet werden.

Der Begriff "Single-Chipmodul" umfasst allgemein Chipmodule, wie sie beispielsweise bei EC-Karten, Telefonkarten, in Karten zur Zugangskontrolle, in Karten bei Zugriffskontrollsystemen oder in Karten zur Authentifizierung Verwendung finden. Der Begriff Single-Chipmodul umfasst ferner solche Chipmodule, die in Form von Bauteilen entweder in Geräte integriert sind oder diese Geräte erweitern.

Die Verwendung von EC- (Eurocheque-) Karten als Zahlungsmittel ist zum festen Bestandteil im heutigen Zahlungsverkehr geworden. Bei diesen Karten werden sog. Smartcards (intelligente Karten) verwendet, um Informationen, wie z.B. Kryptoschlüssel oder Kryptogramme, zu speichern oder zu verarbeiten. Aber auch in vielen anderen Bereichen werden immer häufiger Smartcards eingesetzt, wie z.B. bei Telefonkarten, Kreditkarten und anderen elektronischen Ausweisen. Zentraler Bestandteil dieser Smartcards ist ein Single-Chipmodul bzw. Ein-Chipmodul, dessen Funktionalität von der eines Speichermediums bis hin zu der eines Kryptochips reichen kann. Neben den austauschbaren Single-Chipmodulen, die auf Kartenträgern angeordnet sind, existieren ferner solche, die direkt in Geräte integriert sind, um Daten, wie z.B. einen Kryptoschlüssel, sicher vor einem unberechtigten Zugriff zu speichern.

Die Systeme, bei denen Single-Chipmodule zum Einsatz kommen, können im wesentlichen in zwei Gruppen eingeteilt werden. Zugriffskontrollsysteme sind Conditional-Access-Systeme, d.h. Systeme mit bedingtem Zugriff, wie sie beispielsweise beim Empfang von gebührenpflichtigen Pay-TV- oder anderen Media-Diensten eingesetzt werden. Die End- bzw. Empfangsgeräte, die bei diesen Zugriffskontrollsystemen verwendet werden, umfassen beispielsweise Pay-TV-Decoder bzw. - Entschlüsselungsvorrichtungen oder mobile Empfangsgeräte, wie z.B. Handys. Zugangskontrollsysteme umfassen hingegen Systeme oder Anwendungen zur Zugangskontrolle, wie sie beispielsweise in Form von Kreditkarten zur Sicherstellung eines sicheren bargeldlosen Geldverkehrs oder in Form von Money-Cards und Telefonkarten als Bargeldersatz eingesetzt werden. Die bei diesen Systemen zum Einsatz kommenden Endgeräte umfassen beispielsweise Kreditkarten- oder Bank-Terminals. Sicherheitsmodule, wie z.B. Single-Chipmodule, werden heutzutage überall dort eingesetzt, wo vertrauliche Informationen möglichst unauslesbar, transportabel und geschützt gegen den Zugriff Dritter gespeichert werden müssen.

Chipkarten, wie sie beispielsweise bei Conditional-Access-Systemen zum Einsatz kommen, werden zur endgeräteseitigen Speicherung von Empfangsberechtigungen für Dienste, wie z.B. den Empfang bestimmter gebührenpflichtiger Fernsehprogramme, und von kryptographischen Schlüsseln verwendet. Solche Chipkarten sind in den meisten Fällen nicht fest mit einem Endgerät, wie z.B. einem Pay-TV-Decoder, verbunden, sondern sind von demselben entfernbar und austauschbar. Beispiele für solche austauschbaren Chipkarten zur endgeräteseitigen Speicherung von kryptographischen Schlüsseln und Empfangsberechtigungen sind Pay-TV-Smart-Cards oder Kreditkarten. Diesbezüglich wird auf den Artikel "Conditional Access oder Wie kann man den Zugriff auf Rundfunksendungen kontrollieren?" von Jörg Schwenk in Bernd Seiler (Hrsg.): Taschenbuch der Telekompraxis 1996, Schiele & Schön, Berlin 1996, verwiesen.

Während des Betriebs ist das Single-Chipmodul mit dem jeweiligen Endgerät, in das das Single-Chipmodul eingefügt wird, kommunikativ verbunden, beispielsweise über einen Kartenleser oder eine feste Verdrahtung, falls das Single-Chipmodul in das Endgerät integriert ist. Die Kommunikation des Single-Chipmoduls mit dem Endgerät ist über ein Kommunikationsprotokoll definiert, welches im ISO-Standard 7618 festgelegt ist. Der ISO-Standard stellt vor allem bei Anwendungen, bei denen austauschbare Single-Chipmodule, wie z.B. solche, die in Smart-Cards integriert sind, zum Einsatz kommen, sicher, dass die Kommunikation zwischen dem Endgerät, wie z.B. dem Pay-TV-Decoder, und dem Single-Chipmodul auf Protokollebene einheitlich festgelegt ist.

Je nach Applikation bzw. Anwendung kann in den Single-Chipmodulen eine zusätzliche Software installiert sein, die auf Seiten des Endgeräts eine auf diese zusätzliche Software abgestimmte applikationsabhängige Kommunikationssoftware erforderlich macht. In dem Fall, dass beispielsweise aufgrund erhöhter Sicherheitsanforderungen, eines kompromittierten Systems mit bedingtem Zugriff oder zur Leistungsfähigkeitssteigerung eines Single-Chipmoduls ein neues Single-Chipmodul mit neuer Software eingesetzt werden soll, kann es erforderlich sein, das applikationsspezifische Kommunikationsprotokoll zu ändern. Dies führt dazu, dass bei allen zugehörigen Endgeräten die Software aktualisiert werden muss. Diese notwendigen Anpassungen führen, falls dieselben überhaupt durchführbar sein sollten, vor allem bei mobilen Endgeräten, wie z.B. in Fahrzeugen fest eingebauten Geräten, zu wettbewerbsmäßig untragbar hohen Kosten.

Ein Nachteil bei heutigen auf Single-Chipmodulen basierenden Systemen besteht folglich darin, dass die Kommunikationssoftware in den jeweiligen Endgeräten lediglich für ein zu dem Zeitpunkt der Erstellung der Kommunikationssoftware für das Single-Chipmodul spezifisches Datenkommunikationprotokollformat ausgelegt ist. Falls zu einem späteren Zeitpunkt ein unterschiedliches Kommunikationsprotokoll zur Kommunikation zwischen dem Single-Chipmodul und dem Endgerät oder ein anderes Single-Chipmodul mit einem unterschiedlichen Datenkommunikationsprotokoll verwendet werden soll, weil beispielsweise bei einem Sicherheitssystem Sicherheitsprobleme durch Piratenangriffe aufgetreten sind, muss neben dem Single-Chipmodul auch die endgeräteseitige Software geändert oder das Endgerät ausgetauscht werden. In dem Fall des bargeldlosen Geldverkehrs müssten beispielsweise bei Einführung neuer Bank- oder Kreditkarten die Bankterminals umgerüstet werden, was einen erheblichen Aufwand erfordert.

Aus EP-A- 0 513 507 ist eine Chipkarte bekannt, welche Programme enthält, die jeweils unterschiedliche Kommunikationsprotokolle verwenden. Die Programme befinden sich auf der Chipkarte in einem ROM.

Die Aufgabe der vorliegenden Erfindung besteht darin, eine Vorrichtung, ein Verfahren und ein Signal zu schaffen, die eine wenig aufwendige Steuerung bzw. Änderung des Kommunikationsprotokolls zwischen einem Endgerät und einem demselben zugeordneten Modul ermöglichen.

Diese Aufgabe wird durch ein Verfahren gemäß Anspruch 1, eine Vorrichtung gemäß Anspruch 5 und ein Signal gemäß Anspruch 9 gelöst.

Der vorliegenden Erfindung liegt die Überlegung zugrunde, dass das Problem, die Software von Endgeräten aktualisieren oder sogar die Endgeräte austauschen zu müssen, falls sich das Kommunikationsprotokoll für die Kommunikation zwischen Modul und Endgerät ändert, dadurch beseitigt werden kann, dass von der Sendeeinrichtung an das Endgerät Daten übertragen werden, die die Kommunikation zwischen dem Endgerät und dem jeweiligen Modul definieren. Diese Übertragung der die Kommunikation zwischen Endgerät und Modul definierenden Daten von der Sendeeinrichtung zu der Empfangseinrichtung ermöglicht, dass Aktualisierungen, Verbesserungen oder anderweitige Änderungen des Kommunikationsprotokolls für die Kommunikation zwischen Endgerät und Modul lediglich Änderungsmaßnahmen bei der Sendeeinrichtung erforderlich machen. Statt eine Vielzahl von Endgeräten umrüsten zu müssen, muss folglich lediglich die Sendeeinrichtung, wie z.B. das Kodiersystem bzw. Encoder-System, verändert bzw. umprogrammiert werden. Anders ausgedrückt wird die unaufwendige Systemaktualisierung durch das Einführen eines Kommunikationsverfahrens zwischen einer Stelle, die eine zur Übermittlung an ein Single-Chipmodul gedachte verschlüsselte oder unverschlüsselte Information erzeugt, und einem Single-Chipmodul, wie z.B. einem Sicherheitsmodul in Systemen oder Anwendungen zur Zugangskontrolle oder Zugriffskontrolle, erzielt. Das Kommunikationsverfahren beschreibt, wie die Kommunikation mit einem Single-Chipmodul in einem Endgerät unabhängig von der eingesetzten Technologie erfolgen kann.

Gemäß einem Ausführungsbeispiel weist das Kommunikationsobjekt ferner einen Nutzdatenblock auf, in dem Daten definiert sind, die eine Kommunikation zwischen Empfangseinrichtung und Modul bewirken. Die in dem Parameterblock definierten Daten können eine Mehrzahl von Parameterdatenfeldern umfassen, in denen zumindest entweder eine Angabe des Typs eines für das Modul spezifischen Kommunikationsprotokolls, das zur Kommunikation zwischen Empfangseinrichtung und Modul verwendet werden soll, eine Anweisung, wie der Nutzdatenblock von der Empfangseinrichtung interpretiert werden soll, eine Anweisung zum Auffordern des Moduls, auf einen bereits übertragenen Nutzdatenblock zu antworten, oder eine Anweisung, wie die Empfangseinrichtung eine Antwort des Moduls interpretieren soll, enthalten sein kann.

Gemäß einem weiteren Ausführungsbeispiel ist das Modul ein austauschbares Modul, wie z.B. ein Single-Chipmodul, eine Smart-Card oder ein Sicherheitsmodul, wie sie bei Zugriffskontroll- oder Zugangskontroll-Systemen verwendet werden, wie z.B. bei EC-Karten, Pay-TV-Diensten, Kreditkarten, Telefonkarten, usw. Bei Einführung neuer Module, die ein unterschiedliches Kommunikationsprotokoll erforderlich machen, ist folglich lediglich eine Änderung der Parameterblöcke, um dem Endgerät das neue Kommunikationsprotokoll zu vermitteln, erforderlich.

Ein Vorteil der vorliegenden Erfindung besteht darin, dass bei Systemen oder Anwendungen, bei denen Single-Chipmodule eingesetzt werden, die Kommunikation eines Endgeräts mit einem Single-Chipmodul unabhängig von dem Kommunikationsprotokoll der Software des Single-Chipmoduls sichergestellt werden kann.

Ein weiterer Vorteil besteht darin, dass, falls beispielsweise in einem Chipkartensystem verschiedene, nicht-kompatible Chipkarten eingesetzt werden sollen, durch die vorliegende Erfindung ermöglicht wird, dass die Kommunikation zwischen einem Endgerät, wie z.B. einem TV-Decoder für Pay-TV-Anwendungen, und einer Chipkarte auch bei wechselnden Chipkartentypen sichergestellt ist.

Bevorzugte Ausführungsbeispiele der vorliegenden Erfindung werden nachfolgend bezugnehmend auf die beiliegenden Zeichnungen näher erläutert. Es zeigen:
Fig. 1 ein Blockdiagramm eines Systems mit einem Single-Chipmodul, das die Verwendung von Kommunikationsobjekten gemäß einem Ausführungsbeispiel der vorliegenden Erfindung veranschaulicht; und
Fig. 2 eine schematische Skizze, die den Aufbau der Kommunikationsobjekte von Fig. 1 gemäß einem Ausführungsbeispiel der vorliegenden Erfindung darstellt.

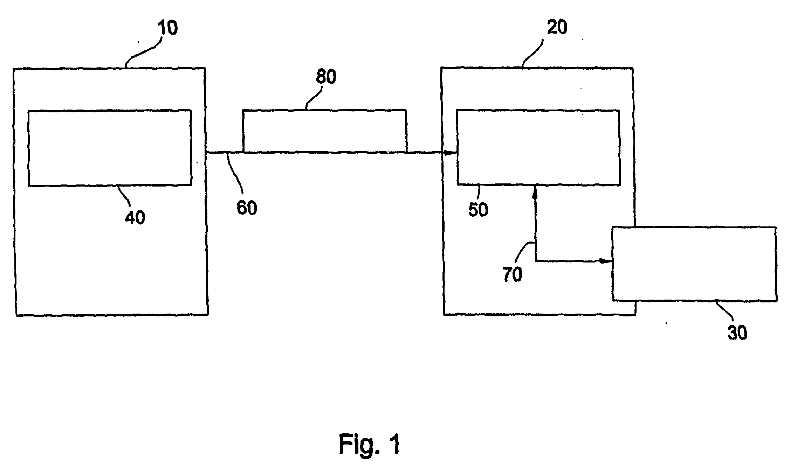

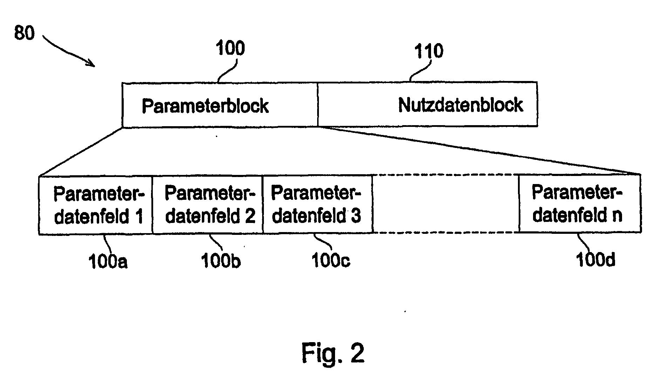

Bezugnehmend auf Fig. 1 und 2 wird zunächst der Aufbau eines Systems mit einem Single-Chipmodul gemäß einem Ausführungsbeispiel der vorliegenden Erfindung beschrieben. Gemäß dem nachfolgend beschriebenen Ausführungsbeispiel ist das System ein Pay-TV-System, das als Sendeeinrichtung ein Encoding-System bzw. Kodiersystem 10, als eine Empfangseinrichtung ein Decoding-System bzw. Dekodiersystem 20, wie z.B. einen Decoder, und als ein Modul ein Single-Chipmodul 30, wie z.B. eine Pay-TV-Smart-Card, aufweist.

Das Kodiersystem 10 umfasst einen Kommunikationsobjektgenerator bzw. eine Kommunikationsobjekterzeugungseinrichtung 40, während das Dekodiersystem 20 einen Kommunikationsobjektinterpretierer 50 aufweist. Das Kodiersystem 10 und das Dekodiersystem 20 stehen in kommunikativer Verbindung, indem der Kommunikationsobjektgenerator 40 des Kodiersystems 10 über eine Übertragungseinrichtung 60, wie z.B. Rundfunk oder Faserleitungen, mit dem Kommunikationsobjektinterpretierer 50 des Dekodiersystems 20 verbunden ist. Der Kommunikationsobjektinterpretierer 50 steht über eine geeignete Einrichtung 70, wie z.B. einen Kartenleser, in kommunikativer Verbindung mit dem Single-Chipmodul 30, wobei das Single-Chipmodul 30 austauschbar ist, d.h. aus dem Kartenleser entfernbar und durch ein anderes Modul ersetzbar, ist. Die Daten, die das Kodiersystem 10 an das Dekodiersystem 20 sendet, sind in Kommunikationsobjekten 80 enthalten, die von dem Kommunikationsobjektgenerator 40 erzeugt und über die Übertragungseinrichtung 60 an den Kommunikationsobjektinterpretierer 50 übertragen werden. Wie es in Fig. 2 zu sehen ist, besteht ein Kommunikationsobjekt 80 aus einem Parameterblock 100 sowie einem Nutzdatenblock 110. Der Parameterblock 100 besteht wiederum aus n Parameterdatenfeldern 100a, 100b, 100c und 100d, wobei n eine ganze Zahl größer Null ist, und in Fig. 2 lediglich exemplarisch vier Paramterblöcke gezeigt sind.

Nachdem im Vorhergehenden der Aufbau des Systems sowie der Aufbau der Kommunikationsobjekte beschrieben worden ist, wird im Folgenden die Funktionsweise des Systems von Fig. 1 beschrieben.

Das Kodiersystem 10 sendet über die Übertragungseinrichtung 60 Nutzdaten, wie z.B. verschlüsselte, gebührenpflichtige TV-Programme, an den Decoder 20. Der Decoder 20 entschlüsselt die von dem Kodiersystem 10 empfangenen Nutzdaten, indem derselbe mit dem Single-Chipmodul 30 kommuniziert, um einen auf demselben gespeicherten kryptographischen Schlüssel oder eine Empfangsberechtigung zu lesen, oder um auf einen Kryptoprozessor des Moduls 30 zuzugreifen. Die Nutzdaten sind in den Nutzdatenblöcken 110 enthalten. Die Nutzdatenblöcke 110 können ferner Daten zur Generierung eines Kommandos an das Single-Chipmodul 30, das eine Rückantwort und deren Interpretation erfordern kann, oder Daten, die auf andere Weise von dem Decoder 20 im Endgerät interpretiert und verarbeitet werden sollen, enthalten. Die Daten in dem Nutzdatenblock 110 können beispielsweise einen Befehl beinhalten, um die Freischaltung eines gebührenpflichtigen TV-Programms zu bewirken, indem die Empfangsberechtigung in dem Single-Chipmodul 30 eingestellt wird, oder um die Empfangsberechtigung zu überprüfen.

Die in den Nutzdatenblöcken 110 enthaltenen Daten erfordern eine geeignete Kommunikation zwischen dem Dekodiersystem 20 und dem Single-Chipmodul 30. Um die Kommunikation zwischen dem Dekodiersystem 20 und dem Single-Chipmodul 30 geeignet zu steuern bzw. ändern, ist es vorgesehen, dass die in den Nutzdatenblöcken 110 enthaltenen Daten entsprechend den in den jeweiligen Parameterblöcken enthaltenen Daten verarbeitet werden. Zu diesem Zweck bestehen die Parameterblöcke 100 aus einem oder mehreren Parameterdatenfeldern 100a - 100d, die Parameter enthalten, die entweder zwingend vorhanden sein müssen, oder solche, die optional eingesetzt werden können. Zwingend vorhanden sind solche Parameter, die die Kommunikation zwischen Single-Chipmodul und Endgerät steuern bzw. ändern, wie z.B. Befehle, Befehlsabläufe, Beschreibungen nachfolgender Nutzdatenblöcke, usw. Optionale Parameter umfassen beispielsweise Befehlsparameter, die sich auf entsprechende Befehle in den Befehlsparameterdatenfeldern beziehen und lediglich dann gesendet werden müssen, falls dieselben von einem bestimmten Vorgabewert abweichen. Darüber hinaus sind Parameter lediglich dann zwingend erforderlich, wenn das bestehende Kommunikationsprotokoll tatsächlich geändert werden soll. Neben einer ständigen Steuerung des Kommunikationsprotokolls für die Kommunikation zwischen Endgerät und Single-Chipmodul, bei der für jeden Nutzdatenblock ein Parameterblock übertragen wird, ist es ferner möglich, das Kommunikationsprotokoll lediglich bei Bedarf, beispielsweise bei Einführung neuer Smartcards, zu ändern. In diesem Fall wird ein Parameterblock, der die erforderlichen Kommunikationsprotokolländerungen enthält, erst dann gesendet, falls Änderungen des Protokolls erforderlich sind, wobei in der Zwischenzeit, d.h. bei gleichbleibendem Kommunikationsprotokoll, zuvor gesendete Parameter im Endgerät gespeichert werden.

Die Parameterblöcke 100 können ferner nach verschiedenen Blocktypen unterschieden werden. Je nach Blocktyp können die einzelnen oder Gruppen von Parametern in den Parameterdatenfeldern 100a - 100d eine oder mehrere der folgenden Informationen enthalten:
- Klassifikation der Eigenschaft eines Nutzdatenblocks, wie z.B. Klassifikation des Nutzdatenblocks als einen Befehl oder als einen Abschnitt kodierter Daten,
- eine Anweisung, wie die entsprechenden Nutzdatenblöcke 110 von dem Decoder 20 interpretiert werden sollen, wie z.B. durch Angabe eines zur Kodierung verwendeten und zur Dekodierung zu verwendenden Algorithmus oder durch Angabe eines geeigneten Befehlsablaufs, wobei die Befehle in dem Befehlsablauf in einem Befehlssatz des Interpreters 50 des Decoders 20 enthalten sind,
- eine Anweisung, die über die Art der Verarbeitung der Nutzdatenblöcke 110 in dem Decoder 20 informiert, wie z.B. darüber, welche Taktfrequenz, Spannungen usw. zur Kommunikation mit dem Single-Chipmodul verwendet werden sollen, und
- eine Anweisung, die das Single-Chipmodul 30 zu Rückmeldungen auf eine oder mehrere erhaltene Anweisungen auffordert und angibt, wie die Rückmeldung des Single-Chipmoduls 30 von dem Dekodiersystem 20 zu interpretieren ist, wie z.B. eine Anweisung zur Überprüfung einer Authentifikation.

Mittels der Parameterblöcke 100 ist eine Anpassung der Kommunikation zwischen Dekodiersystem 20 und Single-Chipmodul 30, die beispielsweise wegen eines neuen Typs von Single-Chipmodul erforderlich wird, ohne das Verändern der Software des Dekodiersystems 20 dadurch ausführbar, dass die Parameterdatenfelder 100a - 100d geeignet eingestellt werden. Diejenigen der Parameterdatenfelder 100a - 100d, die die Generierung eines Kommandos an das Single-Chipmodul 30 und/oder die Verarbeitung einer Rückantwort von dem Single-Chipmodul 30 beschreiben, beinhalten beispielsweise den Typ eines für das Single-Chipmodul 30 spezifischen Kommunikationsprotokolls.

Für verschiedene Single-Chipmodule 30 können ferner verschiedene Parameterdatenfelder 100a - 100d vorgesehen sein, so dass es möglich ist, auch zu einem späteren Zeitpunkt zusätzliche Single-Chipmodule 30 durch ein Endgerät zu unterstützen, indem bei dem Kodiersystem 10 ein entsprechendes Parameterdatenfeld in dem Kommunikationsobjekt 80 kodiert wird.

Folglich gelingt es dem im Vorhergehenden beschriebenen System, die bei vielen herkömmlichen Sicherheitssystemen implementierte enge Bindung der Kommunikationsschnittstelle zwischen Endgerät und Single-Chipmodul zu entkoppeln. Dies wird durch den Einsatz eines Single-Chipmodul-unabhängigen Kommunikationssystems erreicht. Dieses Kommunikationssystem ermöglicht einen für das Endgerät transparenten Transport der in dem Kodiersystem erzeugten Daten an das Dekodiersystem und das in dem Dekodiersystem eingebundene Single-Chipmodul. Der spätere Einsatz eines neuen, zum vorhergehenden Single-Chipmodul inkompatiblen Single-Chipmoduls erfordert dann lediglich eine Änderung der Kodierung in dem Kodiersystem, ohne dass eine Änderung in dem Endgerät bzw. in dem Dekodiersystem erforderlich ist.

Anders ausgedrückt, stellt das Kommunikationssystem einen Container für die Nutzdaten dar, die von dem Kodiersystem an das Dekodiersystem transportiert werden, wobei der Container sämtliche Informationen darüber enthält, wie die Nutzdaten in den Nutzdatenblöcken in dem Endgerät in Verbindung mit dem Single-Chipmodul zu verarbeiten sind.

Die Erfindung schafft somit ein System, das eine Metasprache bzw. eine Kommunikationsbeschreibungssprache für die Kommunikation zwischen einem Single-Chipmodul und einem Endgerät auf Applikationsebene verwendet. Alle Objekte, die an ein Endgerät mit Single-Chipmodul übertragen werden und das Single-Chipmodul betreffen, können mittels der Metasprache kodiert werden. Das Endgerät interpretiert die Metasprache und führt die Kommunikationsanweisungen für das entsprechende Single-Chipmodul aus. Durch die Einführung der Metasprache kann jedes Datenobjekt Metainformationen für verschiedene Single-Chipmodul enthalten, so dass verschiedene Single-Chipmodule mit unterschiedlichen Applikätionskommunikationsprotokollen in demselben Endgerät verwendet werden können. Sollen neue Single-Chipmodule mit geändertem Applikationsprotokoll verwendet werden, so ist lediglich die Metabeschreibung zu ändern oder dieselbe zusätzlich in einem Datenobjekt zu kodieren. Eine Änderung der Software auf Seiten der Endgeräte ist jedoch nicht erforderlich.

Es wird darauf hingewiesen, dass, obwohl im Vorhergehenden die Erfindung bezugnehmend auf ein Pay-TV-System beschrieben worden ist, die Erfindung für sämtliche Systeme verwendbar ist, bei denen ein Modul, wie z.B. ein Single-Chipmodul, in kommunikativer Verbindung mit einem Empfangsgerät steht bzw. stehen kann. Die Erfindung ist insbesondere bei solchen Systemen vorteilhaft anwendbar, die bedingt durch kontinuierlich sich weiterentwickelnde Sicherheitstechniken oft kostenintensiven Anpassungen unterworfen sind. Neben den Zugriffskontrollsystemen, zu denen das Pay-TV-System gehört, ist die vorliegende Erfindung ferner unter anderem auf Zugangskontrollsysteme anwendbar. Ein Beispiel für ein Zugangskontrollsystem ist ein Geldautomatensystem. In dem Fall eines Geldautomatensystems wäre die Sendeeinrichtung beispielsweise eine zentrale Steuerungseinheit einer Bank, während die Empfangseinrichtung ein Geldautomat wäre, in den EC-Karten oder Kreditkarten mit Single-Chipmodulen gesteckt werden können.

Obwohl in der vorhergehenden Beschreibung das Single-Chipmodul austauschbar war, ist statt eines austauschbaren Single-Chipmoduls jegliches Modul verwendbar, das geeignet ist, um mit der Empfangseinrichtung in Kommunikation zu stehen, und zwar sowohl über eine drahtlose als auch eine drahtgebundene Verbindung. Das Modul könnte ferner in die Empfangseinrichtung fest integriert sein.

Obwohl im Vorhergehenden beschrieben worden ist, dass die Nutzdaten in den Nutzdatenblöcken verschlüsselte Daten aufweisen, ist es ferner möglich, dass die in den Nutzdatenblöcken enthaltenen Daten unverschlüsselt übertragen werden.

Obwohl es in Fig. 2 dargestellt ist, dass der Parameterblock am Anfang des Nutzdatenblocks angefügt ist, kann sich der Parameterblock ferner hinter dem Nutzdatenblock befinden. Es ist ferner möglich, dass ein Kommunikationsobjekt lediglich einen Parameterblock aufweist, um eine an das Single-Chipmodul angepasste Kommunikation zwischen der Empfangseinrichtung bzw. dem Endgerät und dem Modul zu bewirken. Der Parameterblock wird beispielsweise lediglich zu bestimmten Zeitpunkten an die Endgeräte übertragen, um bei den Endgeräten die Steuerungen der Kommunikation zwischen Endgerät und Modul für verschiedene Typen von Nutzdatenblöcken zu aktualisieren. Je nach Anwendungsfall ist es möglich, dass einzelne oder mehrere Kommunikationsobjekte über beliebige, auf Single-Chipmodulen bestehende Datenübertragungssysteme an die Dekodiereinheit übertragen werden.

## Patentansprüche

1. Verfahren zur Steuerung der Kommunikation in einem System, das eine Sendeeinrichtung (10), eine Empfangseinrichtung (20) und ein Chipmodul (30) aufweist, wobei die Sendeeinrichtung (10) und die Empfangseinrichtung (20) in kommunikativer Verbindung stehen, und das Chipmodul (30) in kommunikativer Verbindung mit der Empfangseinrichtung (20) steht und in dieselbe eingefügt ist, mit folgenden Schritten:
Übertragen eines Kommunikationsobjekts (80) von der Sendeeinrichtung (10) zu der Empfangseinrichtung (20), wobei das Kommunikationsobjekt (80) einen Parameterblock (100), in dem zumindest eine Anweisung definiert ist, die definiert, wie eine Kommunikation zwischen Empfangseinrichtung (20) und Chipmodul (30) durchzuführen ist, und einen Nutzdatenblock (110), in dem Daten definiert sind, die eine Kommunikation zwischen Empfangseinrichtung (20) und Chipmodul (30) bewirken, aufweist;
Interpretieren der Anweisung in dem Parameterblock (100) durch die Empfangseinrichtung (20), um ein Kommunikationsprotokoll der Empfangseinrichtung (20) zur Kommunikation mit dem Chipmodul (30) zu steuern; und
Verarbeiten der in dem Nutzdatenblock definierten Daten gemäß dem Kommunikationsprotokoll der Empfangseinrichtung (20) durch die Empfangseinrichtung (20), wodurch die durch die in dem Nutzdatenblock (110) definierten Daten bewirkte Kommunikation zwischen Empfangseinrichtung (20) und Chipmodul (30) gemäß dem Kommunikationsprotokoll der Empfangseinrichtung (20) durchgeführt wird.

2. Verfahren gemäß Anspruch 1, bei dem der Parameterblock (100) eine Mehrzahl von Parameterfeldern (100a - 100d) aufweist, die eine Mehrzahl von Parametern enthalten, die zumindest eine der folgenden Informationen enthalten:
eine Angabe des Typs eines für das Chipmodul (30) spezifischen Kommunikationsprotokolls, das zur Kommunikation zwischen Empfangseinrichtung (20) und Chipmodul (30) verwendet werden soll;
eine Anweisung, wie der Nutzdatenblock (110) von der Empfangseinrichtung (20) interpretiert werden soll;
eine Anweisung zum Auffordern des Chipmoduls (30), auf einen bereits übertragenen Nutzdatenblock (110) zu antworten; und
eine Anweisung, wie die Empfangseinrichtung (20) die Antwort des Chipmoduls (30) interpretieren soll.

3. Verfahren gemäß Anspruch 1 oder 2, bei dem das Chipmodul austauschbar ist.

4. Verfahren gemäß einem der Ansprüche 1 bis 3, bei dem die Sendeeinrichtung (10) eine zentrale Sendeeinrichtung eines Zugriffskontrollsystems oder eines Zugangskontrollsystems, die Empfangseinrichtung (20) ein Endgerät des Systems und das Chipmodul (30) ein Single-Chipmodul ist.

5. Vorrichtung zur Steuerung der Kommunikation in einem System, das eine Sendeeinrichtung (10), eine Empfangseinrichtung (20) und ein Chipmodul (30) aufweist, wobei die Sendeeinrichtung (10) und die Empfangseinrichtung (20) in kommuni kativer Verbindung stehen, und das Chipmodul (30) in kommunikativer Verbindung mit der Empfangseinrichtung (20) steht und in dieselbe eingefügt ist, wobei die Vorrichtung folgende Merkmale aufweist:
eine Einrichtung (40) in der Sendeeinrichtung zum Erzeugen eines Kommunikationsobjekts (80), wobei das Kommunikationsobjekt einen Parameterblock (100), in dem zumindest eine Anweisung definiert ist, die definiert, wie die Kommunikation zwischen Empfangseinrichtung (20) und Chipmodul (30) durchzuführen ist, und einen Nutzdatenblock (110), in dem Daten definiert sind, die eine Kommunikation zwischen Empfangseinrichtung (20) und Chipmodul (30) bewirken, aufweist;
eine Einrichtung (60) zum Übertragen des Kommunikationsobjekts (80) von der Sendeeinrichtung (10) zu der Empfangseinrichtung (20);
Mittel zum Interpretieren der Anweisung in dem Parameterblock (100) durch die Empfangseinrichtung (20), um ein Kommunkationsprotokoll der Empfangseinrichtung (20) zur Kommunikation mit dem Chipmodul (30) zu steuern; und
Mittel zum Verarbeiten der in dem Nutzdatenblock definierten Daten gemäß dem Kommunikationsprotokoll der Empfangseinrichtung (20) durch die Empfangseinrichtung (20), wodurch die durch die in dem Nutzdatenblock (110) definierten Daten bewirkte Kornmunikation zwischen Empfangseinrichtung (20) und Chipmodul (30) gemäß dem Kommunikationsprotokoll der Empfangseinrichtung (20) durchgeführt wird.

6. Vorrichtung gemäß Anspruch 5, bei der der Parameterblock (100) eine Mehrzahl von Parameterfeldern (100a - 100d) aufweist, die eine Mehrzahl von Parametern enthalten, die zumindest eine der folgenden Informationen enthalten:
eine Angabe des Typs eines für das Chipmodul (30) spezifischen Kommunikationsprotokolls, das zur Kommunikation zwischen Empfangseinrichtung (20) und Chipmodul (30) verwendet werden soll;
eine Anweisung, wie der Nutzdatenblock (110) von der Empfangseinrichtung (20) interpretiert werden soll;
eine Anweisung zum Auffordern des Chipmoduls (30), auf einen bereits übertragenen Nutzdatenblock (110) zu antworten; und
eine Anweisung, wie die Empfangseinrichtung (20) die Antwort des Chipmoduls (30) interpretieren soll.

7. Vorrichtung gemäß Anspruch 5 oder6, bei der das Chipmodul (30) austauschbar ist.

8. Vorrichtung gemäß einem der Ansprüche 5 bis 7, bei der die Sendeeinrichtung (10) eine zentrale Sendeeinrichtung eines Zugriffskontrollsystems oder eines Zugangskontrollsystems, die Empfangseinrichtung (20) ein Endgerät des Systems und das Chipmodul (30) ein Single-Chipmodul ist.

9. Signal zur Übertragung von einer Sendeeinrichtung (10) zu einer Empfangseinrichtung (20) zur Steuerung der Kommunikation in einem System, das die Sendeeinrichtung (10), die Empfangseinrichtung (20) und ein Chipmodul (30) aufweist, wobei die Sendeeinrichtung (10) und die Empfangseinrichtung (20) in kommunikativer Verbindung stehen, und das Chipmodul (30) in kommunikativer Verbindung mit der Empfangseinrichtung (20) steht und in dieselbe eingefügt ist, wobei das Signal einen Nutzdatenblock (110) und einen Parameterblock (100) aufweist, wobei in dem Nutzdatenblock (110) Daten definiert sind, die eine Kommunikation zwischen Empfangseinrichtung (20) und Chipmodul (30) bewirken, und in dem Parameterblock (100) Anweisungen definiert sind, die definieren, wie die Kommunikation zwischen Empfangseinrichtung (20) und Chipmodul (30) durchzuführen ist.

## Claims

1. A method for controlling the communication in a system comprising a transmitting means (10), a receiving means (20) and a chip module (30), wherein the transmitting means (10) and the receiving means (20) are communicatively connected and wherein the chip module (30) is communicatively connected to the receiving means (20) and inserted in the same, comprising the following steps:
transferring a communication object (80) from the transmitting means (10) to the receiving means (20), wherein the communication object (80) comprises a parameter block (100) in which at least one instruction is defined which defines how communication between the receiving means (20) and the chip module (30) is to be performed, and a payload data block (110), in which data is defined which causes a communication between the receiving means (20) and a chip module (30);
interpreting the instruction within the parameter block (100) by the receiving means (20) in order to control a communication protocol of the receiving means (20) for communicating with the chip module (30); and
processing the data defined within the payload data block according to the communication protocol of the receiving means (20) by the receiving means (20), whereby the communication between the receiving means (20) and the chip module (30) caused by the data defined in the payload data block (110) is performed according to the communication protocol of the receiving means (20).

2. The method according to claim 1, wherein the parameter block (100) comprises a plurality of parameter fields (100a - 100d), containing a plurality of parameters containing at least one of the following pieces of information:
a statement of the type of a communication protocol which is specific for the module (30), which is to be used for a communication between the receiving means (20) and the chip module (30);
an instruction of how the payload data block (110) is to be interpreted by the receiving means (20);
an instruction for requesting the chip module (30) to answer to an already transferred payload data block (110); and
an instruction of how the receiving means (20) is to interpret the answer of the chip module (30).

3. The method according to claim 1 or 2, wherein the chip module is exchangeable.

4. The method according to one of claims 1 to 3, wherein the transmitting means (10) is a central transmitting means of a conditional access system or an access control system, the receiving means (20) is a terminal device of the system and the chip module (30) is a single chip module.

5. A device for controlling the communication in a system comprising a transmitting means (10), a receiving means (20) and a chip module (30), wherein the transmitting means (10) and the receiving means (20) are communicatively connected and the chip module (30) is communicatively connected to the receiving means (20) and inserted into the same, the device comprising:
a means (40) within the transmitting means for generating a communication object (80), wherein the communication object comprises a parameter block (100) in which at least one instruction is defined defining how the communication between the receiving means (20) and the chip module (30) is to be performed, and a payload data block (110) in which data is defined causing a communication between the receiving means (20) and the chip module (30); and
a means (60) for transferring the communication object (80) from the transmitting means (10) to the receiving means (20);
a means for interpreting the instruction within the parameter block (100) by the receiving means (20) in order to control a communication protocol of the receiving means (20) for communicating with the chip module (30); and
a means for processing the data defined within the payload data block according to the communication protocol of the receiving means (20) by the receiving means (20), whereby the communication between the receiving means (20) and the chip module (30) caused by the data defined in the payload data block (110) is performed according to the communication protocol of the receiving means (20).

6. The device according to claim 5, wherein the parameter block (100) comprises a plurality of parameter fields (100a - 100d) containing a plurality of parameters, containing at least one of the following pieces of information:
a statement of the type of communication protocol which is specific for the chip module (30) which is to be used for a communication between the receiving means (20) and the module (30);
an instruction of how the payload data block (110) is to be interpreted by the receiving means (20);
an instruction for requesting the chip module (30) to answer to an already transferred payload data block (110); and
an instruction about how the receiving means (20) is to interpret the answer of the chip module (30).

7. The device according to claim 5 or 6, wherein the chip module (30) is exchangeable.

8. The device according to one of claims 5 to 7, wherein the transmitting means (10) is a central transmitting means of a conditional access system or an access control system, the receiving means (20) is a terminal device of the system and the chip module (30) is a single chip module.

9. A signal for transferring from a transmitting means (10) to a receiving means (20), for controlling the communication within a system comprising the transmitting means (10), the receiving means (20) and a chip module (30), wherein the transmitting means (10) and the receiving means (20) are communicatively connected and wherein the chip module (30) is communicatively connected to the receiving means (20) and inserted into the same, wherein the signal comprises a payload data block (110) and a parameter block (100), wherein data is defined in the payload data block (110) causing a communication between the receiving means (20) and the chip module (30), and wherein instructions are defined within the parameter block (100), defining how the communication between the receiving means (20) and the chip module (30) is to be performed.

## Revendications

1. Procédé pour le contrôle de transmission dans un système présentant un dispositif d'émission (10), un dispositif de réception (20) et un module à puce (30), le dispositif d'émission (10) et le dispositif de réception (20) étant reliés en communication, et le module à puce (30) étant relié en communication au dispositif de réception (20) et étant inséré dans ce dernier, aux étapes suivantes consistant à :
transmettre un objet de communication (80) du dispositif d'émission (10) au dispositif de réception (20), l'objet de communication (80) présentant un bloc de paramètre (100) dans lequel est définie au moins une indication définissant la manière dont doit être réalisée une communication entre le dispositif de réception (20) et le module à puce (30), et un bloc de données utiles (110) dans lequel sont définies des données qui créent une communication entre le dispositif de réception (20) et le module à puce (30) ;
interpréter l'indication dans le bloc de paramètre (100) par le dispositif de réception (20), pour contrôler un protocole de transmission du dispositif de réception (20) pour la communication avec le module à puce (30) ; et
traiter les données définies dans le bloc de données utiles selon le protocole de transmission du dispositif de réception (20) par le dispositif de réception (20), d'où la communication entre le dispositif de réception (20) et le module à puce (30) créée par les données définies dans le bloc de données utiles (110) s'effectue selon le protocole de transmission du dispositif de réception (20).

2. Procédé selon la revendication 1, dans lequel le bloc de paramètre (100) présente une pluralité de champs de paramètre (100a à 100d) contenant une pluralité de paramètres contenant au moins l'une des informations suivantes :
une indication du type de protocole de transmission spécifique au module à puce (30) devant être utilisé pour la communication entre le dispositif de réception (20) et le module à puce (30) ;
une indication de la manière dont doit être interprété le bloc de données utiles (110) par le dispositif de réception (20) ;
une indication pour inviter le module à puce (30) à répondre à un bloc de données utiles (110) déja transmis ; et
une indication de la manière dont le dispositif de réception (20) doit interpréter la réponse du module à puce (30).

3. Procédé selon la revendication 1 ou 2, dans lequel le module à puce est échangeable.

4. Procédé selon l'une des revendications 1 à 3, dans lequel le dispositif d'émission (10) est un dispositif d'émission central d'un système de contrôle d'accès ou d'un système de contrôle d'entrée, le dispositif de réception (20) est un terminal du système et le module à puce (30) est un module monopuce.

5. Dispositif pour le contrôle de transmission dans un système présentant un dispositif d'émission (10), un dispositif de réception (20) et un module à puce (30), le dispositif d'émission (10) et le dispositif de réception (20) étant reliés en communication, et le module à puce (30) étant relié en communication au dispositif de réception (20) et inséré dans ce dernier, le dispositif présentant les caractéristiques suivantes :
un dispositif (40), dans le dispositif d'émission, destiné à générer un objet de communication (80), l'objet de communication présentant un bloc de paramètre (100) dans lequel est définie au moins une indication définissant la manière dont doit être réalisée la communication entre le dispositif de réception (20) et le module à puce (30), et un bloc de données utiles (110) dans lequel sont définies des données qui créent une communication entre le dispositif de réception (20) et le module à puce (30) ;
un dispositif (60) pour transmettre l'objet de communication (80) du dispositif d'émission (10) au dispositif de réception (20) ;
un moyen pour interpréter l'indication dans le bloc de paramètre (100) par le dispositif de réception (20), afin de contrôler un protocole de transmission du dispositif de réception (20) pour la communication avec le module à puce (30) ; et
un moyen pour traiter les données définies dans le bloc de données utiles selon le protocole de transmission du dispositif de réception (20) par le dispositif de réception (20), d'où la communication créée par les données définies dans le bloc de données utiles (110) entre le dispositif de réception (20) et le module à puce (30) est réalisée selon le protocole de transmission du dispositif de réception (20).

6. Dispositif selon la revendication 5, dans lequel le bloc de paramètre (100) présente une pluralité de champs de paramètre (100a à 100d) contenant une pluralité de paramètres contenant au moins l'une des informations suivantes :
une indication du type de protocole de transmission spécifique au module à puce (30) devant être utilisé pour la communication entre le dispositif de réception (20) et le module à puce (30) ;
une indication de la manière dont doit être interprété le bloc de données utiles (110) par le dispositif de réception (20) ;
une indication pour inviter le module à puce (30) à répondre à un bloc de données utiles (110) déja transmis ; et
une indication de la manière dont le dispositif de réception (20) doit interpréter la réponse du module à puce (30).

7. Dispositif selon la revendication 5 ou 6, dans lequel le module à puce (30) est échangeable.

8. Dispositif selon l'une des revendications 5 à 7, dans lequel le dispositif d'émission (10) est un dispositif d'émission central d'un système de contrôle d'accès ou d'un système de contrôle d'entrée, le dispositif de réception (20) est un terminal du système et le module à puce (30) est un module monopuce.

9. Signal pour la transmission d'un dispositif d'émission (10) vers un dispositif de réception (20) pour le contrôle de transmission dans un système présentant le dispositif d'émission (10), le dispositif de réception (20) et un module à puce (30), le dispositif d'émission (10) et le dispositif de réception (20) étant reliés en communication, et le module à puce (30) étant relié en communication au dispositif de réception (20) et inséré dans ce dernier, le signal présentant un bloc de données utiles (110) et un bloc de paramètre (100), dans le bloc de données utiles (110) étant définies des données qui créent une communication entre le dispositif de réception (20) et le module à puce (30), et dans le bloc de paramètre (100) étant définies des indications définissant la manière dont doit s'effectuer la communication entre le dispositif de réception (20) et le module à puce (30).
